Europäisches Patentamt

European Patent Office

Office européen des brevets

(11) Veröffentlichungsnummer: **0 033 913**
**B1**

(12) **EUROPÄISCHE PATENTSCHRIFT**

(45) Veröffentlichungstag der Patentschrift:
20.03.85

(21) Anmeldenummer: **81100667.5**

(22) Anmeldetag: **30.01.81**

(51) Int. Cl.⁴: **C 09 B 67/20, C 09 D 17/00**

(54) Verfahren zur Herstellung von Pigmentpräparationen und ihre Verwendung.

(30) Priorität: **07.02.80 DE 3004442**

(43) Veröffentlichungstag der Anmeldung:
**19.08.81 Patentblatt 81/33**

(45) Bekanntmachung des Hinweises auf die Patenterteilung:
**20.03.85 Patentblatt 85/12**

(84) Benannte Vertragsstaaten:
**CH DE FR GB IT LI**

(56) Entgegenhaltungen:
**BE - A - 496 387**
**DE - A - 1 927 134**
**US - A - 2 146 755**

(73) Patentinhaber: **HOECHST AKTIENGESELLSCHAFT,
Postfach 80 03 20, D-6230 Frankfurt am Main 80 (DE)**

(72) Erfinder: **Ehl, Klaus, Dr., Geisenheimer Strasse 92,
D-6000 Frankfurt am Main 71 (DE)**
Erfinder: **Deubel, Reinhold, Dr., Geierfeld 51, D-6232 Bad
Soden am Taunus (DE)**

## Beschreibung

Gegenstand der Erfindung ist ein Verfahren zur Herstellung fester Präparationen organischer Pigmente, das dadurch gekennzeichnet ist, dass man zu einem wässrigen Medium welches das Pigment enthält oder in dem das Pigment gebildet wird, einen Stärke-Phosphorsäurepartialester, welcher eine Affinität zu dem Pigment besitzt, zugibt, das präparierte Pigment mechanisch abtrennt und die Präparation trocknet.

Gegenstand der Erfindung ist weiterhin die Verwendung der erfindungsgemäss erhaltenen festen Pigmentpräparationen zum Pigmentieren hydrophiler Systeme.

Organische Pigment fallen bei ihrer Herstellung meist in Form hydrophober Kristalle an, die zudem zur Aggretat- und Agglomeratbildung neigen. Derartige Pigmente sind daher in Wasser bzw. wasserhaltigen Bindemitteln im allgemeinen schlecht dispergierbar und zeigen demzufolge auch geringe Farbstärke. Aus diesen Gründen sind bei der Herstellung von wässrigen Zubereitungen organischer Pigmente zur Erreichung der vollen Farbstärke aufwendige Dispergiereinrichtungen üblich, wie beispielsweise Kneter und Perlmühlen. Mit derartigen Dispergiereinrichtungen hergestellte flüssige Pigmentkonzentrate, die ausser Wasser und Pigment Zusätze von Lösemitteln und obenflächenaktiven Substanzen enthalten und die durch Einrühren in Wasser bzw. wässrige Systeme verdünnt werden können, sind handelsüblich. Bekannt sind weiterhin feste Pigmentzubereitungen mit verbesserter Wasserdispergierbarkeit, die durch inniges Vermahlen von trokkenem Pigment und Hilfsmitteln erhalten wurden.

Weiterhin sind Verfahren zur Herstellung von Präparationen organischer Pigmente bekannt, bei denen man zu einem wässrigen Medium, welches das Pigment enthält, ein Polysaccharid mit anionischen Gruppen, insbesondere ein Cellulosederivat, zugibt und die Präparation trocknet (vgl. Deutsche Offenlegungsschrift 1 927 134 und US-Patentschrift 2 146 757). Die zu verwendenden Mengen Polysaccharid betragen 10 Gew.-% und mehr, bezogen auf das Pigmentgewicht.

Gegenstand der Erfindung ist demgegenüber ein einfaches Verfahren, das ohne aufwendige Apparate feste Pigmentpräparationen mit niedrigem Gehalt an Hilfsmitteln liefert, die ebenfalls ohne grossen Aufwand in hydrophile Systeme eingearbeitet werden können. Feste Präparationen mit geringem Hilfsmittelanteil haben gegenüber flüssigen den Vorteil, dass sie aufgrund des geringeren Volumens und Gewichts weniger Lager- und Transportkosten erfordern. Ausserdem neigen flüssige Präparationen zu Veränderungen während des Lagerns, beispielsweise zur Rekristallisation und Flockung und dadurch bedingt zu Farbstärkeverlusten und Farbtonänderungen. Darüber hinaus erfordern brennbare Lösemittel in flüssigen Präparationen besondere Vorsichtsmassnahmen.

Es ist auch bekannt, organische Pigmente in wässrigen Systemen mit Hilfsmitteln zu behandeln, beispielsweise im Rahmen der Synthese. Beim mechanischen Abtrennen der Pigmente aus dem wässrigen System, beispielsweise durch Filtration, und Waschen werden jedoch die zugesetzten Hilfsmittel weitestgehend entfernt, wenn nicht besondere Massnahmen getroffen werden. Das erfindungsgemässe Verfahren erlaubt es jedoch ohne solche besondere Massnahmen, organische Pigmente mit geringen Mengen an Hilfsmitteln so zu präparieren, dass die durch übliches mechanisches Abtrennen, beispielsweise Filtrieren, Trocknen und nachfolgendes Mahlen hergestellten Pulverpigmente in hydrophilen Systemen leicht dispergierbar sind.

Im folgenden werden bevorzugte Ausgestaltungen der Erfindung näher erläutert.

Der Stärke-Phosphorsäurepartialester, welcher eine Affinität zum zu präparierenden Pigment besitzt, im folgenden kurz «Präpariermittel» genannt, ist entweder wasserlöslich oder wasserquellbar. Die geforderte Affinität zur Pigmentoberfläche, die ein «substantives Aufziehen» und eine Retention auf der Pigmentoberfläche bewirkt, kann in einem einfachen Vorversuch ermittelt werden: bleibt das Präpariermittel bei der mechanischen Abtrennung und beim Waschen des Presskuchens weitgehend auf der Pigmentoberfläche, so wird nach dem üblichen Trocknen und Mahlen ein leicht in Wasser redispergierbares Pigment erhalten.

Als Präpariermittel wird ein Stärke-Phosphorsäurepartialester verwendet, bei welchem die anionischen Gruppen auch in der Salzform vorliegen können.

Das Präpariermittel kann einzeln oder in Mischungen verwendet werden. Es wird in Mengen von 0,5 bis 5%, bezogen auf das Pigmentgewicht, eingesetzt. Höhere Konzentrationen bringen keine Vorteile mehr, können aber die Filtrierbarkeit beeinträchtigen.

Erfindungsgemäss präpariert werden können organische Pigmente aller Klassen, beispielsweise Kupferphthalocyanine, Chinacridone, Dioxazine, Anthanthrone, Thioindigopigmente, Naphthalintetracarbonsäurederivate, Perylentetracarbonsäurederivate, insbesondere jedoch Azopigmente der Mono- und Disazoreihe, vor allem solche mit Acetessigsäurearylamiden, β-Hydroxynaphthosäurearylamiden oder verlackten β-Hydroxynaphthoesäuren als Kupplungskomponenten, sowie Pigmente aus der Reihe der Triphenylmethanfarbstoffe wie Alkaliblau.

Das Präpariermittel kann in fester oder gelöster Form zu einer wässrigen Suspension der Pigmente bzw. der entsprechenden Vorstufen zugesetzt werden. So kann als Pigmentsuspension die rohe, elektrolythaltige, bei der Herstellung des Pigmentes anfallende Suspension dienen, beispielsweise bei Azopigmenten die Kuppelbrühe. Es können aber auch Aufschlämmungen von gegebenenfalls gewaschenen Pigmentpresskuchen behandelt werden. In jedem Falle wird die wässrige Pigmentsuspension kurz mit dem Präpariermittel verrührt, wobei übliche Rühraggregate wie Anker- oder Rahmen-Blatt-Rührer verwendet werden können. Anschliessend wird das präparierte Pigment mechanisch abgetrennt, beispielsweise abfiltriert. Sofern erforderlich, wird die Pigmentsuspension, gegebenenfalls zur Entfernung von Salzen, gewaschen und das abgetrennte präparierte Pigment getrocknet und gemahlen. Unter «abgetrenntem präpariertem Pigment» ist hierbei zu verstehen, dass das Produkt von der wässrigen Phase in üblicher Weise getrennt wird, wobei die wässrige Phase mit üblichen Methoden, wie Absaugen, Abpressen oder Zentrifugieren, so weitgehend entfernt wird, wie dies zweckmässig erscheint.

Die Produkte können auch in Granulatform überführt werden, wobei ihre leichte Redispergierbarkeit in Wasser erhalten bleibt. Es können erfindungsgemäss auch Mischungen von Pigmenten präpariert werden.

Erfindungsgemäss werden die Pigmentpräparationen zum Pigmentieren hydrophiler Systeme verwendet, also in wässrigen, wasserhaltigen oder wasserverdünnbaren Systemen. Hierbei genügen übliche Rühr- bzw. Mischeinrichtungen, zum Beispiel konventionelle Rührwerksaggregate oder Schnellrührer, wobei gegebenenfalls auch Lösemittel, übliche Hilfsmittel, Füll- und Zusatzstoffe zugesetzt werden können. Es genügen hierbei kurze Dispergierzeiten, um die volle Farbstärke im Anwendungsmedium zu erzielen.

Die erfindungsgemäss präparierten Pigmente eignen sich vorteilhaft zur Pigmentierung von wässrigen oder wasserverdünnbaren Lacken, Anstrich- und Beschichtungsmitteln, beispielsweise Dispersionsanstrichfarben, zur Pigmentierung von wässrigen Druckfarben, beispielsweise Flexodruckfarben, von Tapetenfarben sowie von Druckpasten für den Pigmentdruck auf Textilien.

Die erfindungsgemäss präparierten Pigmente können einzeln oder vorteilhaft in Mischungen eingesetzt werden und eignen sich auch aufgrund des geringen Gehalts an Präpariermitteln zum Einsatz in Kombinationen mit üblichen Pulverpigmenten oder Pigmentpräparationen. Der geringe Gehalt an Hilfsmitteln wirkt sich auch günstig auf das Lagervolumen und Transportgewicht aus und vermeidet Störungen durch Unverträglichkeit mit anderen Hilfsmitteln, beispielsweise in Druckpasten.

Erfindungsgemäss werden somit auf äusserst einfache Weise – im Falle des Zusatzes bei der Azokupplung ohne zusätzlichen Verfahrensschritt – wertvolle und vielseitig verwendbare feste Pigmentpräparationen erhalten, die mit einfachsten Mitteln im Anwendungsmedium unter Ausbildung der vollen Farbstärke verteilbar sind.

Die Erfindung wird in den folgenden Beispielen näher erläutert. Teile und Prozentangaben beziehen sich hierbei auf das Gewicht.

Als Präpariermittel wurde eingesetzt: Anionischer Phosphatester aus Kartoffelstärke, wasserlöslich, ca. 1% P-Gehalt (®RETAMYL AP der Fa. Scholtens Chemische Fabrieken Foxhohl).

Beispiel 1

Pigment Yellow 3 wird in bekannter Weise durch Kupplung von diazotiertem 4-Chlor-2-nitroanilin auf N-Acetoacetyl-o-chloranilid hergestellt. In die Kuppelbrühe werden, auf Pigment bezogen, 3% Präpariermittel eingerührt. Anschliessend wird das Pigment in üblicher Weise abfiltriert, mit Wasser gewaschen, getrocknet und gemahlen. Die so erhaltene pulverförmige Pigmentpräparation zeigt wesentlich bessere Dispergierbarkeit in Wasser und wässrigen Systemen als ein unpräpariertes Pigment Yellow 3. In Abänderung des Verfahrens kann auch das Pigment nach der Kupplung als Presskuchen isoliert und gewaschen und anschliessend der salzfreie wässrige Presskuchen mit 3% Präpariermittel I präpariert werden. Trocknen und Mahlen erfolgen dann wie oben.

Beispiel 2

Pigment Yellow 98 wird in bekannter Weise durch Kupplung von diazotiertem 4-Chlor-2-nitroanilin auf N-Acetoacetyl-3-chlor-6-amino-toluol hergestellt. Die Kupplungsbrühe oder auch der bereits gewaschene Presskuchen werden mit 3% Präpariermittel präpariert und analog Beispiel 1 aufgearbeitet.

Das so erhaltene Pigmentpulver ist besser dispergierbar als unpräpariertes Pigment Yellow 98.

Beispiel 3

Pigment Yellow 1 wird in bekannter Weise durch Kupplung von diazotiertem 3-Nitro-4-amino-toluol auf N-Acetoacetyl-anilin hergestellt. Die Präparation der Kupplungsbrühe oder des Presskuchens mit 3% Präpariermittel analog Beispiel 1 führt zu einem in Wasser leicht dispergierbaren Pigmentpulver.

Beispiel 4

Pigment Red 194 wird nach DE-AS 1 569 736 hergestellt und auf der Stufe des wässrigen Presskuchens mit 3% Präparierungsmittel versetzt. Das nach üblicher Aufarbeitung durch Trocknen und Mahlen erhaltene Pulverpigment ist in Wasser wesentlich leichter dispergierbar als unbehandeltes Pigment Red 194.

Beispiel 5

Pigment Orange 43 wird gemäss DE-AS 1 569 736 hergestellt und als wässriger Presskuchen mit 3% Präpariermittel I präpariert. Die Dispergierbarkeit in Wasser wird dadurch gegenüber dem unbehandelten Pigment deutlich verbessert.

Beispiel 6

Pigment Violett 19 wird hergestellt nach DE-PS 1 184 831 und in Form des wässrigen Presskuchens mit 3% Präparationsmittel präpariert, wodurch die Wasserdispergierbarkeit deutlich verbessert wird.

Beispiel 7

Pigment Blue 18 (Alkaliblau) wird durch saure Kondensation von 4-Chlorbenzotrichlorid und Chlorbenzol, anschliessende Umsetzung mit einer Mischung von Anilin und m-Toluidin und Sulfierung des Reaktionsproduktes hergestellt. Nach dem Umfällen erhält man einen schwach mineralsauren Presskuchen, der mit 3% Präpariermittel versetzt wird und nach dem Trocknen und Mahlen zu einem ausgezeichnet wasserdispergierbaren Pulver führt. Unpräpariertes Alkaliblau ist in wässrigen Systemen wesentlich schlechter dispergierbar.

Beispiel 8

Pigment Blue 15 (Kupferphthalocyanin) der β-Modifikation wird in Form des wässrigen Presskuchens mit 3% Präpariermittel versetzt. Nach dem Trocknen und Mahlen erhält man ein Pulver, das in Wasser besser dispergierbar ist als unbehandeltes Pigment Blue 15.

Beispiel 9

Pigment Orange 34 wird durch Kupplung von diazotiertem Dichlorbenzidin auf p-Tolylmethylpyrazolon hergestellt. Durch Vermischen der Kuppelbrühe mit 3% Präpariermittel lässt sich analog Beispiel 1 ein gut wasserdispergierbares Pigmentpulver erhalten.

**Patentansprüche**

1. Verfahren zur Herstellung von Präparationen organischer Pigmente, wobei man zu einem wässrigen Medium, welches das Pigment enthält oder in dem das Pigment gebildet wird, ein Polysaccharid mit anionischen Gruppen, das eine Affinität zu dem Pigment besitzt, zugibt, dadurch gekennzeichnet, dass man dem Medium 0,5 bis 5%, bezogen auf das Pigmentgewicht, eines Särke-Phosphorsäurepartialesters zugibt, das präparierte Pigment mechanisch abtrennt und die Präparationen trocknet.

2. Verfahren nach Anspruch 1, dadurch gekennzeichnet, dass das wässrige Medium das Reaktionsmedium der Pigmentsynthese ist.

3. Verfahren nach Anspruch 2, dadurch gekennzeichnet, dass das wässrige Medium eine Aufschlämmung eines Pigmentpresskuchens ist.

4. Verfahren nach Anspruch 1 bis 3, dadurch gekennzeichnet, dass das Pigment ein Azopigment ist.

5. Verfahren nach Anspruch 1, 2, und 4, dadurch gekennzeichnet, dass der Stärke-Phosphorsäurepartialester zur Kuppelbrühe gegeben wird.

6. Verwendung der nach Anspruch 1 bis 5 erhaltenen Präparationen zum Pigmentieren hydrophiler Systeme.

7. Verwendung der nach Anspruch 1 bis 5 erhaltenen Präparationen zum Pigmentieren von wässrigen oder wasserverdünnbaren Lacken, Anstrich- und Beschichtungsmitteln sowie Druckfarben und -pasten.

**Claims**

1. A process for the preparation of a formulation of an organic pigment, whereby a polysaccharide with anionic groups and with an affinity for the pigment is added to an aqueous medium in which the pigment is present or formed, characterized in that 0.5 to 5% (related to the pigment weight) of a partial phosphoric acid ester of starch is added to the medium, the formulated pigment is separated off mechanically and the formulation is dried.

2. A process as claimed in claim 1, characterized in that the aqueous medium is the reaction medium of the pigment synthesis.

3. A process as claimed in claim 1, characterized in that the aqueous medium is a suspension of a pigment press cake.

4. A process as claimed in any one of claims 1 to 3, characterized in that the pigment is an azo pigment.

5. A process as claimed in any one of claims 1, 2 and 4, characterized in that the partial phosphoric acid ester of starch is added to the coupling liquor.

6. Use of the formulations obtained as claimed in any one of claims 1 to 5 for pigmenting hydrophilic systems.

7. Use of the formulations obtained as claimed in any one of claims 1 to 5 for pigmenting aqueous or waterdilutable lacquers, paints and coating agents as well as printing inks and printing pastes.

**Revendications**

1. Procédé de fabrication de préparations de pigments organiques, dans lequel on ajoute à un milieu aqueux, qui contient le pigment ou dans lequel est formé le pigment, un polysaccharide possédant des groupes anioniques et présentant une affinité vis-à-vis du pigment, caractérisé en ce qu'on ajoute au milieu 0,5 à 5%, sur la base du poids du pigment, d'un phosphate partiel d'amidon, que l'on sépare mécaniquement le pigment préparé et que l'on sèche les préparations.

2. Procédé selon la revendication 1, caractérisé en ce que le milieu aqueux est le milieu réactionnel de la synthèse du pigment.

3. Procédé selon la revendication 1, caractérisé en ce que le milieu aqueux est une suspension d'un tourteau pigmentaire.

4. Procédé selon l'une des revendications 1 à 3, caractérisé en ce que le pigment est un pigment azoïque.

5. Procédé selon l'une des revendications 1, 2 et 4, caractérisé en ce que le phosphate partiel d'amidon est ajouté au bouillon de copulation.

6. Utilisation des préparations obtenues selon l'une des revendications 1 à 5 pour pigmenter des systèmes hydrophiles.

7. Utilisation des préparations obtenues selon l'une des revendications 1 à 5 pour pigmenter des vernis, peintures et produits de revêtement, ainsi qu'encres d'imprimerie et pâtes d'impression, aqueux ou diluables à l'eau.